# EUROPÄISCHE PATENTSCHRIFT

(11) **EP 3 278 199 B1**
(45) Veröffentlichungstag und Bekanntmachung des Hinweises auf die Patenterteilung: **07.09.2022**
(21) Anmeldenummer: 16714761.0
(22) Anmeldetag: 01.04.2016
(51) Int. Cl.: G06F 3/041

(54) **TOUCHPAD UND SYSTEM ZUM ERFASSEN EINES GEGENSTANDES AUF EINER ERFASSUNGSFLÄCHE SOWIE ERZEUGEN UND AUSGEBEN GEGENSTANDSSPEZIFISCHER INFORMATION**
TOUCHPAD AND SYSTEM FOR DETECTING AN OBJECT ON A DETECTION SURFACE, AND GENERATING AND RELEASING OBJECT-SPECIFIC INFORMATION
PAVÉ TACTILE ET SYSTÈME DE DÉTECTION D'UN OBJET SUR UNE SURFACE DE DÉTECTION ET DE GÉNÉRATION ET DE MISE EN SORTIE D'INFORMATIONS SPÉCIFIQUES À L'OBJET

(30) Priorität: 02.04.2015 DE 102015004354
(43) Veröffentlichungstag der Anmeldung: 07.02.2018
(73) Patentinhaber: Bauer, Jörg R., 88255 Baienfurt (DE)
(72) Erfinder: Bauer, Jörg R., 88255 Baienfurt (DE)
(74) Vertreter: Kramer Barske Schmidtchen Patentanwälte PartG mbB
(86) Internationale Anmeldenummer: PCT/EP2016/000547
(87) Internationale Veröffentlichungsnummer: WO 2016/155887

(56) Entgegenhaltungen:
- EP-A1- 2 853 386
- EP-A2- 2 154 503
- WO-A1-03/019519
- CN-U- 203 596 000
- DE-A1-102011 007 112
- US-A1- 2003 117 476
- US-A1- 2003 235 452
- US-A1- 2006 256 090
- US-A1- 2012 194 457
- US-A1- 2013 002 574
- US-A1- 2013 265 275

## Beschreibung

Die Erfindung betrifft ein System zum Erfassen der Position wenigstens eines Gegenstandes, der auch als Finger ausgebildet sein kann, und/oder der Art des wenigstens eines Gegenstandes auf einer Erfassungsfläche sowie Erzeugen und Ausgeben gegenstandsspezifischer Information.

Aus modernen IP Kommunikationsgeräten, wie Laptops, Tablet Computern, Smartphones usw. sind Touchpads nicht mehr wegzudenken. Mit solchen Touchpads kann die Position eines über das Touchpad geführten Fingers auf dem Touchpad erkannt werden. Eine Markierung auf einem Bildschirm kann entsprechend der Position des Fingers über den Bildschirm bewegt werden und im Computer abgespeicherte Programme, die unterschiedlichen Bildschirmpositionen zugeordnet sind, können aktiviert werden.

Systeme zum Erfassen eines Gegenstandes oder Fingers auf einer Oberfläche sind beispielsweise aus der US 2003/235452, der US 2006/256090 A1 EP 2 154 503 A2, der US 2013/0002574 A1, der WO03/019519, der US 2013/0265275 A1, und der EP 2 853 386 A1 bekannt. Weitere Systeme sind aus US2012/194457 A1, DE 10 2011 007112 A1, US 2009/096757 A1, US 2003/117476 A1 und CN 203 596 000 U bekannt.

Der Erfindung liegt die Aufgabe zugrunde, lediglich mit einem Touchpad ausgerüstete einfach und schnell herzustellende Systeme zu schaffen, die neue Einsatzmöglichkeiten eröffnen.

Diese Aufgabe wird mit den Gegenständen gemäß dem unabhängigen Anspruch gelöst. Weiterbildungen sind in den abhängigen Ansprüchen angegeben.

Gemäß einer bevorzugten Ausführungsform ist eine Dekorschicht oder ein auf einer Berührschicht aufgebrachtes Dekor mittels eines Tintenstrahldruckverfahrens ausgebildet. Durch die Herstellung der Dekorschicht oder des Dekors, die bzw. das völlig undurchsichtig sein kann, mittels eines Tintenstrahldruckverfahren ist es möglich, das Touchpad auf einfache Weise an unterschiedlichste Einsatzzwecke anzupassen, wobei diese Anpassung außerordentlich kostengünstig und in einem Produktionsablauf erst sehr spät entsprechend kundenspezifischen Anforderungen erfolgen kann.

Gemäß einer weiteren bevorzugten Ausführungsform ist das Touchpad insbesondere dessen funktioneller Teil sehr kostengünstig herstellbar, indem seine Leiter in einem Tintenstrahldruckverfahren gedruckt werden. Das Touchpad kann auf diese Weise an unterschiedliche Anforderungen beispielsweise auch bezüglich seiner Auflösung angepasst werden.

Bei dem beanspruchten System werden von dem Touchpad in der Erfassungseinheit erfasste Gegenstandsmerkmale, wie Position des Gegenstandes und weitere für den Gegenstand charakteristische Daten, wie die Kontur der auf der Erfassungsfläche befindlichen Unterseite des Gegenstandes oder spezielle Merkmale des Gegenstandes, als Gegenstandsdaten an eine von der Erfassungseinheit getrennte Steuereinheit gesendet. In der Steuereinheit werden nach einem vorbestimmten Programm aus den Gegenstandsdaten Auswertdaten erzeugt, die die Basis für von einer Ausgabeeinheit der Steuereinheit ausgegebene Informationen sind.

Als Gegenstand kann jegliches Objekt dienen, das von dem Touchpad kapazitiv erfassbar ist, beispielsweise Schreibgriffelspitzen, Fingerspitzen, Figuren, Fahrzeuge usw. Die Auswertdaten enthalten in einem einfachen von den Ansprüchen nicht abgedeckten Fall lediglich die Position eines Gegenstandes auf der Erfassungsfläche. Sie können auch eine durch Bewegen des Gegenstandes, beispielsweise einer Schreibspitze, umfahrene Fläche enthalten, die ein Bedienfeld bildet, das beispielsweise durch Einfügen eines dem Programm bekannten Symbols mithilfe der Schreibspitze mit einer konkreten Bedeutung belegt wird, entsprechend der die Ausgabeeinheit bei einer anschließenden Berührung des Bedienfeldes eine aus den Auswertdaten hergeleitete Information ausgibt.

Ein Gegenstand im Sinne dieser Offenbarung umfasst beispielsweise physische Objekte und Körperteile wie Finger.

Die Erfindung wird im Folgenden anhand schematischer Zeichnungen beispielsweise und mit weiteren Einzelheiten erläutert. Es stellen dar:
- Figur 1a):: eine schematische perspektivische Ansicht eines erfindungsgemäßen Systems,
- Figur 1b):: eine in dem System der Figur 1 enthaltene Erfassungseinheit in auseinandergezogener Darstellung,
- Figur 2:: eine gegenüber der Figur 1 abgeänderte Ausführungsform einer Erfassungseinheit,
- Figur 3:: eine schematische Darstellung zur Erläuterung einer beispielhaften Anwendung des erfindungsgemäßen Systems,
- Figur 4:: eine schematische Darstellung zur Erläuterung der Programmierbarkeit des erfindungsgemäßen Systems,
- Figur 5:: schematische Darstellungen zur Erläuterung der Kombinierbarkeit erfindungsgemäßer Erfassungseinheiten,
- Figur 6:: schematische Darstellungen zur Erläuterung der Kombinierbarkeit und Kommunikation erfindungsgemäßer Systeme,
- Figur 7:: schematische Aufsichten auf drei Ausführungsformen einer Erfassungseinheit mit unterschiedlichen Funktionsschichten,
- Figur 8:: eine schematische Aufsicht auf eine weitere Ausführungsform einer Erfassungseinheit,
- Figur 9:: eine perspektivische Ansicht einer abgeänderten Ausführungsform einer Erfassungseinheit
- Figur 10:: eine schematische Darstellung zur Erläuterung der Integration einer OLED Schicht in eine erfindungsgemäße Erfassungseinheit,
- Figur 11:: eine schematische Aufsicht auf eine weitere Ausführungsform einer Erfassungseinheit,
- Figuren: 12a-12d: Aufsichten auf Tintenstrahldruckmuster zum Ausbilden eines Leiterbahn-Designs mit flächigen Leiterbereichen,
- Figuren: 13a-13d: Aufsichten auf Tintenstrahldruckmuster zum Ausbilden eines Leiterbahn-Designs mit linienförmigen Leiterbereichen,
- Figuren: 14a-14c: Querschnittsansichten eines Leiterbahn-Designs mit flächigen Leiterbereichen und eine entsprechende Aufsicht,

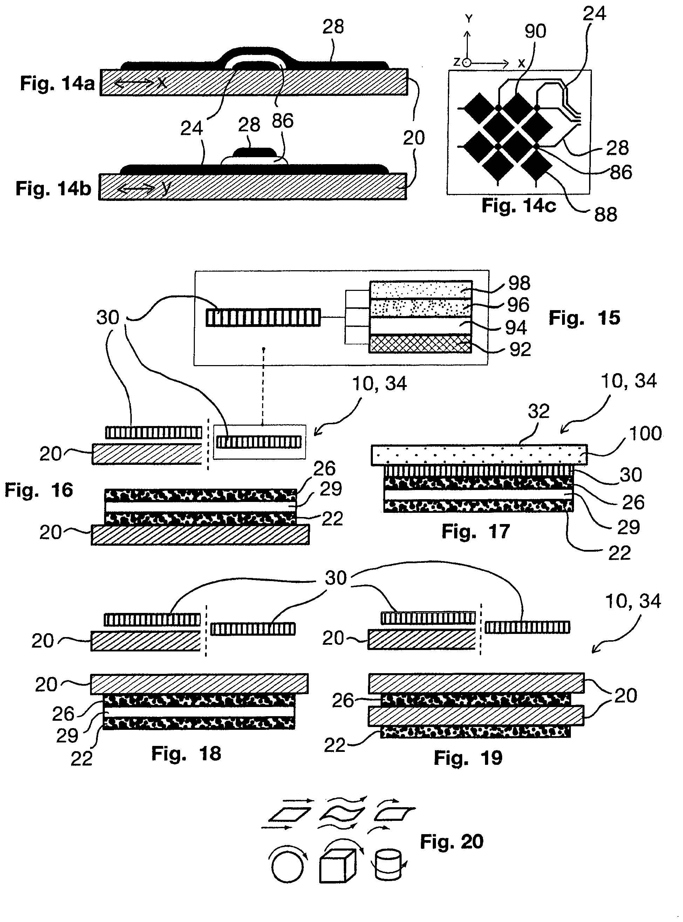

- Figur 15:: eine detaillierte Querschnittsansicht des möglichen Aufbaus einer Dekorschicht,
- Figur 16:: eine Querschnittsansicht des Schichtaufbaus gemäß einer weiteren Ausführungsform,
- Figur 17:: eine Querschnittsansicht des Schichtaufbaus gemäß einer weiteren Ausführungsform, die nicht alle beanspruchten Merkmale aufweist,
- Figur 18:: eine Querschnittsansicht des Schichtaufbaus gemäß einer weiteren Ausführungsform,
- Figur 19:: eine Querschnittsansicht des Schichtaufbaus gemäß einer weiteren Ausführungsform,
- Figur 20:: eine schematische Darstellung möglicher Formen einer Trägerschicht bzw. eines Grundkörpers auf die Leiter oder Funktionsschichten aufgebracht werden können,

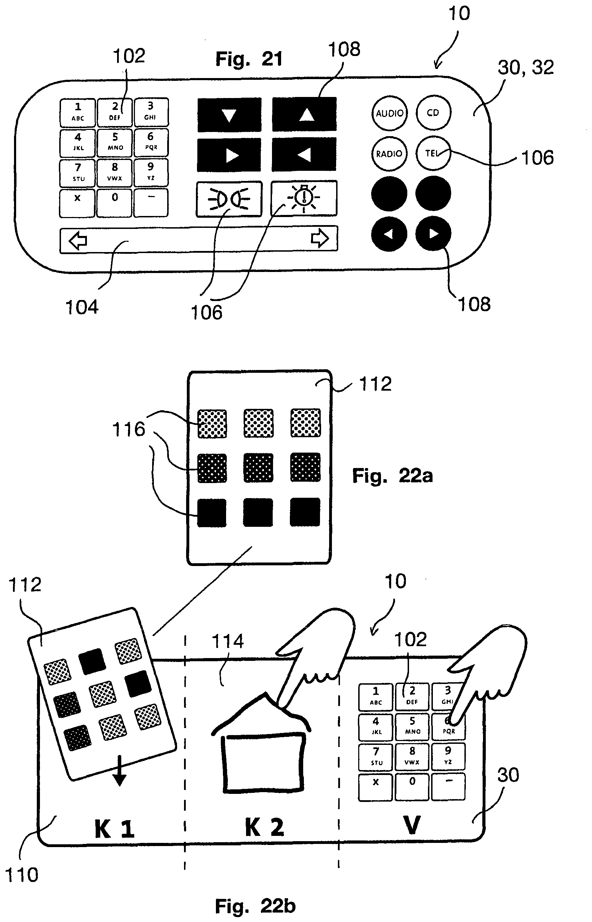

- Figur 21:: eine schematische Aufsicht auf eine weitere Ausführungsform einer Erfassungseinheit,
- Figuren 22a und 22b:: eine schematische Aufsicht auf eine weitere Ausführungsform einer Erfassungseinheit und einer entsprechenden Codekarte, und

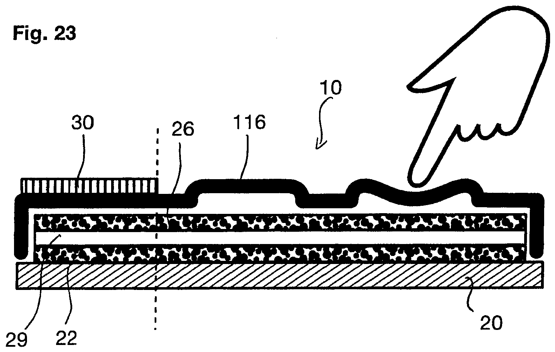

- Figur 23:: eine Querschnittsansicht des Schichtaufbaus gemäß einer weiteren Ausführungsform, die nicht alle beanspruchten Merkmale aufweist.

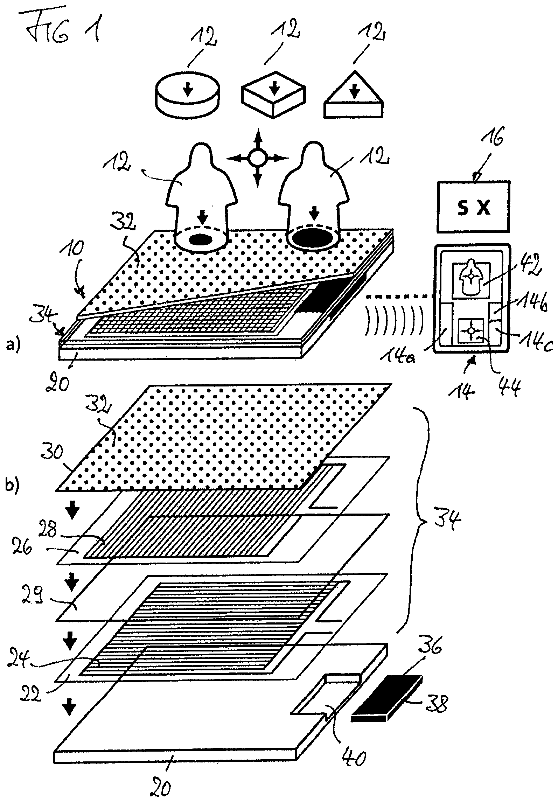

Gemäß Figur 1a) weist ein erfindungsgemäßes System eine Erfassungseinheit 10, mit der Gegenstände 12 erfasst werden können, eine Steuereinheit 14 und eine Programmeinheit 16 auf.

Die Erfassungseinheit 10 ist, wie insbesondere aus Figur 1b) ersichtlich, schichtweise aufgebaut und enthält eine Trägerschicht 20, beispielsweise eine Grundplatte, eine erste Funktionsschicht 22 mit elektrischen Leitern 24, eine zweite Funktionsschicht 26 mit elektrischen Leitern 28, eine zwischen den Schichten 22 und 26 angeordnete Isolierschicht 29 zur Isolierung der Leiter 24 von den Leitern 28 und eine über der zweiten Funktionsschicht 26 angeordnete Berühr-bzw. Dekorschicht 30, deren Oberseite eine Erfassungsfläche 32 bildet. Die Dekorschicht 30 weist eine Dekorierung auf, auf der beispielsweise Positionsfelder, Wege/Bahnen, visuelle Zeichen wie Ornamente, Bilder, Piktogramme, grafische Flächen wie Farbfelder oder Buchstaben-Zahlenfelder ausgebildet sind, die Teile der Erfassungsfläche 32 bilden. Die Dekorschicht ist nicht als Bildschirm ausgebildet, sondern eine bevorzugt aus Farbpigmenten ausgebildete (statische) Schicht (optional vollständig oder partiell durchleuchtbar).

Funktionsschichten 22 und 26, die auch als Basisschichten bezeichnet werden, mit den auf ihnen angeordneten elektrischen Leitern 24 und 28 sind nur beispielhaft angegeben und bilden zusammen mit der Dekorschicht 30 ein an sich bekanntes, insgesamt mit 34 bezeichnetes Touchpad bzw. Berührfeld, mit dem je nach Aufbau das Vorhandensein eines Gegenstandes 12 auf der Erfassungsfläche 32 kapazitiv erfasst werden kann. Bei an sich bekannten Touchpads ist die Dekorschicht allerdings nicht mit einem Dekor ausgebildet, das visuell und/oder haptisch erfassbar ist, sondern lediglich durch eine Berührschicht mit homogener Oberfläche gebildet.

Ein Gegenstand 12 kann jedwelches dreidimensionale Bauteil sein, wie eine Figur, ein Tier, ein technischer Gegenstand, eine Karte usw. Eine individuelle Erkennbarkeit eines Gegenstandes 12 kann durch die Kontur von dessen Grundfläche oder in oder nahe der Grundfläche eingelagerte leitfähige Materialien erreicht werden.

Die Herstellung der das Touchpad 34 bildenden Schichten kann auf unterschiedliche Weise erfolgen. Beispielsweise können die elektrisch leitenden Bereiche der Funktionsschichten mittels eines digitalen Drucksystems, beispielsweise Tintenstrahlbedruckung, auf entgegengesetzten Seiten einer gemeinsamen Isolierfolie aus Kunststoff oder Papier aufgebracht werden. Bevorzugt sind die Funktionsschichten 22 und 26 Folien aus elektrisch isolierendem Material (zum Beispiel Kunststoff oder Papier), auf die bevorzugt mittels eines elektronisch steuerbaren Tröpfchendruckverfahrens (Inkjet) elektrische Leiterbahnen bzw. elektrische Beschichtungen aufgebracht werden. Die Folien werden mit ihren nicht elektrisch leitend beschichteten Seiten aufeinander angeordnet. Die Dekorschicht 30 kann ebenfalls mittels eines digitalen Drucksystems unmittelbar auf die darunter liegende Funktionsschicht aufgebracht werden. Alternativ kann die Dekorschicht 30 eine vorgefertigte Folie, beispielsweise aus Kunststoff oder Papier, enthalten, auf die beispielsweise mittels Tintenstrahlbedruckung ein optisches Dekor aufgebracht wird. Dieses Dekor kann dreidimensional ausgebildet sein, so dass beispielsweise Sollpositionen von auf der Erfassungsfläche 32 zu positionierenden Gegenständen auch haptisch erfassbar sind.

Die Trägerschicht 20 kann aus Kunststoff, wie PE, PET, PS, PP oder Papier/Karton, Glas, Holz, Holzwerkstoff, Metall oder Keramik bestehen. Die Trägerschicht 20 kann in sich steif oder bei geeignetem Material (z.B. Folie) biegsam sein, wobei die gesamte Erfassungseinheit 10 dann biegsam ist oder sogar insgesamt gefaltet werden kann. Die Trägerschicht kann unmittelbar durch eine ebene oder gewölbte Oberfläche eines dreidimensionalen Bauteils gebildet sein. Mittels einer von einer 3-D-Robotik gesteuerten, digitalen Aufbringeinrichtung lassen sich sämtliche übereinander angeordnete Schichtbereiche 24, 29, 38, 30 direkt aufbringen.

Die Leiterbahnen bzw. elektrisch leitenden Beschichtungen der Funktionsschichten 22 und 26 werden über in den Figuren nur schematisch dargestellte Verbindungsleitungen und Kontaktierungen einer Auswerteinheit 36 zugeführt. In der Auswerteinheit 36 wird in an sich bekannter Weise mittels der kapazitiven Funktion des Touchpads ein Signal erzeugt, das die an jedem Kreuzungspunkt zwischen zwei senkrecht zueinander angeordneten Leiterbahnmustern vorhandene Kapazität enthält, die davon abhängt, ob sich über dem Kreuzungspunkt auf der Erfassungsfläche 32 ein Gegenstand befindet oder nicht. Dieses Signal enthält somit Gegenstandsdaten, die von der Position eines auf der Erfassungsfläche 32 befindlichen Gegenstandes 12 abhängen. In der Auswerteinheit 36 können Gegenstandsdaten mehrerer auf der Dekorschicht 30 befindlicher stationärer oder sich bewegender Gegenstände 12 erfasst werden. Über ein Softwareprogramm lassen sich Bewegungs- und Anordnungsfolgen der Gegenstände erfassen.

Die Auswerteinheit 36 enthält eine Sendeeinheit 38, mit der die Gegenstandsdaten über eine Leitung (zum Beispiel USB-Stecker) oder berührungslos über WLAN, Bluetooth, NFC usw. zu einer oder mehreren weiteren Einheiten gesendet werden können, beispielsweise der Steuereinheit 14, die ein Smartphone sein kann. Die Auswerteinheit 36 enthält vorzugsweise eine Stromversorgung, deren Batterie beispielsweise von extern über eine Leitung geladen werden kann und die zur Energieversorgung der in der Auswerteinheit 36 befindlichen elektronischen Komponenten und des Touchpads 34 dient. Die Energieversorgung der Auswerteinheit 36 kann unmittelbar von extern über ein Kabel erfolgen, so dass die Auswerteinheit 36 keine Batterie bzw. keinen Akkumulator enthalten muss.

Die Auswerteinheit 36 kann integraler Bestandteil der Erfassungseinheit 10 sein und ist dann vorzugsweise in die Trägerschicht 20 integriert. Die Auswerteinheit 36 kann auch in einem separaten Gerätemodul enthalten sein, das vorteilhaft in eine Ausnehmung der Trägerschicht 20 einschiebbar ist.

Die auf der Erfassungsfläche 32 anordenbaren Gegenstände 12 können unterschiedlichster Art sein. Die Unterseite der Gegenstände 12 kann beispielsweise metallisch beschichtet sein, so dass die Kapazitäten der Kreuzungspunkte der elektrischen Leiterbahnen (Sensorpunkte) unterhalb der Unterseite verändert werden und bei entsprechend geringen Abständen zwischen den Kreuzungspunkten die Größe der Fläche der Unterseite und deren Kontur in den Gegenstandsdaten enthalten sein kann, die von der Sendeeinheit 38 gesendet werden. Wenn an der Unterseite der Gegenstände nur einzelne Bereiche mit Metallschichten oder elektrisch leitenden Schichten versehen sind oder einzelne Flächenbereiche mit unterschiedlich dicken Metallschichten versehen sind, kann das Muster der leitenden Bereiche von dem Touchpad 34 erfasst werden und in den Gegenstandsdaten enthalten sein. Somit kann vom Touchpad nicht nur die Position eines Gegenstandes sondern können auch spezifische Merkmale des Gegenstandes erfasst werden, wie Form, Größe und Musterung oder Codierung seiner Unterseite. Es versteht sich, dass die elektrisch leitenden Schichten an der Unterseite der Gegenstände nicht freiliegen müssen, sondern innerhalb von die Unterseite der Gegenstände bildenden Schichten, beispielsweise aus Kunststoff, Holz usw., angeordnet sein können. Die in Figur 1a) dargestellten Gegenstände 12 sind beispielhaft für verschiedene Formen, Flächen, Musterungen bzw. Codierungen der auf der Erfassungsfläche 32 befindlichen Unterseite der Gegenstände.

Die Steuereinheit 14 kann ein Smartphone, ein Tablet-Computer oder sonstiger PC, eine Spielbox usw. sein und enthält eine Empfangseinheit 14a zum Empfangen der Gegenstandsdaten, einen Computer 14b zum Auswerten der Gegenstandsdaten und Erzeugen von von den Gegenstandsdaten abhängigen Auswertdaten, ein Display 42, auf dem die Auswertdaten als Art des Gegenstandes 12 und/oder seine Position auf der Erfassungsfläche 32 angezeigt werden, und eine Ausgabeeinheit 14c, mit der von der Position des Gegenstandes 12 auf der Erfassungsfläche 32 und/oder der Art des Gegenstandes 12 abhängige visuelle und/oder akustische Befehle ausgebbar sind.

Die Programmiereinheit 16 enthält in die Steuereinheit 14 eingebbare Programme, entsprechend denen ein Display 42 und ein Bedienfeld 44 der Steuereinheit 14 gesteuert werden.

Das beschriebene System kann für unterschiedlichste Anwendungen und Zwecke eingesetzt werden.

Ein Beispiel ist folgendes:
Sei angenommen, einer der Gegenstände 12 sei ein Pferd und ein anderer der Gegenstände 12 sei ein Hund. Auf dem Display 42 der Steuereinheit 14 werden dann ein Pferd und ein Hund an der jeweiligen Position auf der Erfassungsfläche 32 angezeigt. Die Identifikation der Gegenstände als Pferd bzw. Hund ist über deren Unterseiten möglich. In der Steuereinheit 14 ist ein Programm aktiviert, das einen Benutzer, beispielsweise ein Kind, auffordert, das Pferd zu seinem Übernachtungsplatz zu bewegen, einem Stall, der auf der Erfassungsfläche 32 dargestellt ist. Auf der Erfassungsfläche 32 ist zusätzlich eine Hundehütte dargestellt. Ein Benutzer des Systems muss auf eine Aufforderung hin, die visualisiert sein kann oder akustisch erfolgt, das Pferd ergreifen und auf der Erfassungsfläche 32 auf den Stall setzen. Von dem in der Steuereinheit 14 aktivierten Programm wird zunächst erkannt, ob der Benutzer das Pferd und nicht den Hund ergreift. Wenn er den Hund ergreift, erfolgt ein Fehlersignal. Des Weiteren muss das Pferd in den Stall bewegt werden, was mittels des Touchpads 34 erkannt wird. Wenn das Pferd nicht in den Stall bewegt wird, erfolgt wiederum ein Fehlersignal. Wie aus dem vorstehenden Beispiel ersichtlich, eignet sich das erfindungsgemäße System beispielsweise für spielendes Lernen.

Es sind zahlreiche weitere Beispiele von Spielen möglich. Die Programmeinheit 16 kann zahlreiche Programme enthalten, die auf die jeweilige Erfassungsfläche 32 abgestimmt sind. Die Erfassungsfläche kann eine Kodierung aufweisen, die von der Programmeinheit 16 ausgelesen wird, so dass die Programmeinheit 16 in der Steuereinheit 14 ein der jeweiligen Erfassungsfläche 32 und gegebenenfalls weiteren Parametern, wie einem Satz von Gegenständen, entsprechendes Programm aktiviert.

Das erfindungsgemäße System eignet sich nicht nur zur Verwendung für vielerlei Arten von Spielen, sondern auch für logistische Anwendungen. Sei beispielsweise angenommen, das Touchpad 34 ist auf eine ganze Parkfläche verteilt, wobei jeder Parkplatz einem Sensorpunkt entspricht. Im Display 42 der Steuereinheit 14 wird die Belegung der Parkplätze angezeigt, so dass freie Parkplätze identifiziert werden können. In der Einfahrt zum Parkhaus können diese Plätze mit entsprechenden Hinweisen für die Einfahrenden angezeigt werden. In einer Weiterbildung kann jeder Parkplatz mit einer Mehrzahl von Sensorpunkten ausgestattet sein, so dass die Größe des abgestellten Fahrzeugs und damit die Größe eines freien Parkplatzes ermittelt werden kann. Wenn bei der Einfahrt eines neuen Fahrzeugs dessen Größe ermittelt und in die Steuereinheit 14 eingegeben wird, kann ein fahrzeugspezifischer Parkhinweis gegeben werden.

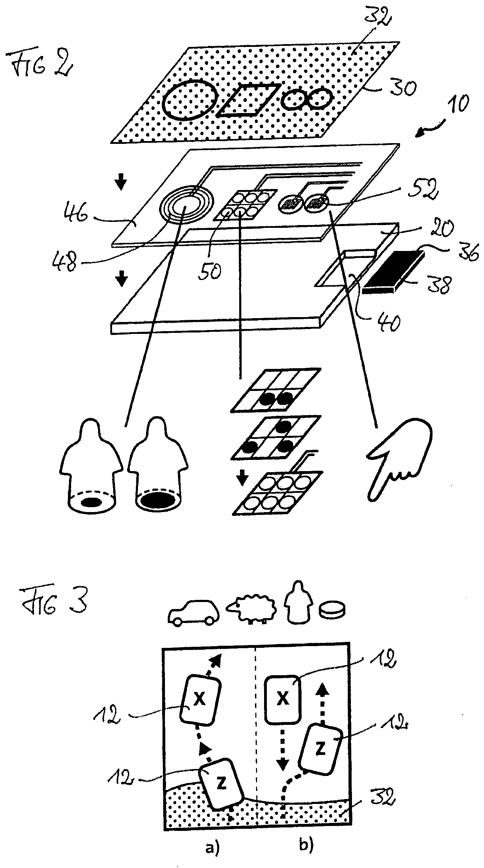

Figur 2 zeigt eine Ausführungsform der Erfassungseinheit 10, die zusätzlich zu dem in Figur 2 nicht dargestellten Touchpad 34 eine Funktionsschicht 46 mit elektrischen Leitern, wie eine Antenne 48 und/oder kodierbare Sensorfelder 50 und/oder Schaltfelder 52 aufweist, deren Signale der Auswerteinheit 36 zugeführt werden und von der Sendeeinheit 38 an die Steuereinheit 14 (Figur 1) gesendet werden. Damit können von einem Benutzer weitere Signale in die Steuereinheit 14 eingegeben werden. Die Funktionsschicht 46 kann unmittelbar unter der Berührschicht 30 oder unmittelbar über der Trägerschicht 20 angeordnet werden. Die Leiterbahnen der Funktionsschicht 46 können ebenfalls mittels eines programmierbaren Tröpfchendruckverfahrens aufgebracht werden. Um eine gegenseitige Störung des Touch-Feldes mit den zusätzlich integrierten Antennen oder Sensorfeldern zu vermeiden, können sich die Funktionen in einer Intervallschaltung mit Wechselfunktion steuern lassen.

Figur 3 verdeutlicht ein Anwendungsbeispiel des erfindungsgemäßen Systems, bei dem auf der Erfassungsfläche 32 mit eigenen Antrieben versehene, fernsteuerbare Gegenstände 12 von dem Bedienfeld 44 der Steuereinheit 14 aus gesteuert bewegt werden können. Entsprechend dem im Steuergerät aktivierten Programm können unterschiedliche Aufgaben gelöst werden. Der Erfassungsfläche 32 bzw. der Erfassungseinheit 10 können verschiedene Steuereinheiten 14 zugeordnet werden, wobei von einer Steuereinheit aus der Gegenstand X und von der anderen Steuereinheit aus der Gegenstand Z gesteuert wird. Dabei müssen unterschiedliche Aufgaben, wie Überholvorgänge, Einparken, Vermeiden von Kollisionen usw. gelöst werden. Dabei kann beispielsweise eine Aufgabe darin liegen, dass das Fahrzeug Z das Fahrzeug X verfolgt. Eine andere Aufgabe kann darin liegen, dass sich die Fahrzeuge X und Z ausweichen.

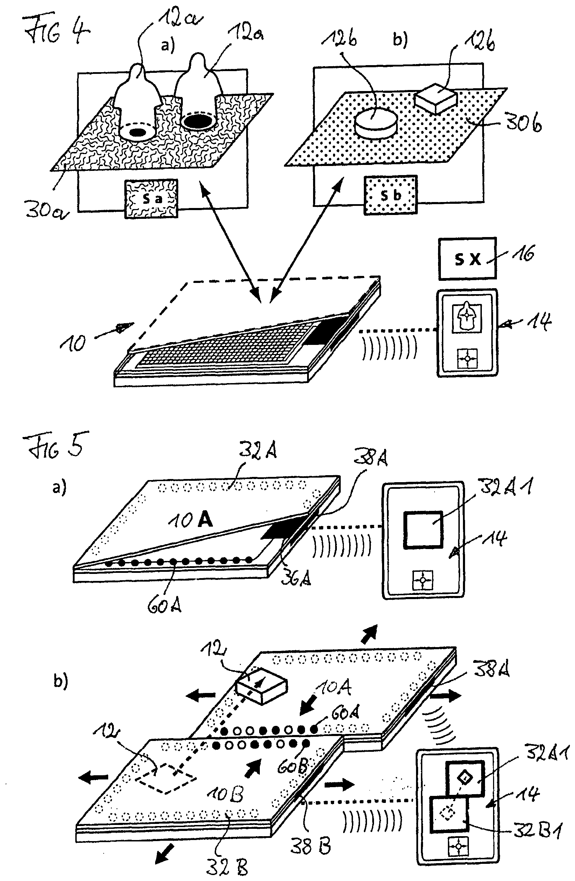

Figur 4 verdeutlicht, wie eine Erfassungseinheit 10 allein durch Auswechseln der Berührschicht sowie gegebenenfalls der Gegenstände für unterschiedliche Anwendungen bzw. Spiele genutzt werden kann. Zu der Dekorschicht 30a mit optisch gestalteter Erfassungsfläche 32a und den Gegenständen 12a gehört ein Programm Sa. Zu der Dekorschicht 30b mit optisch gestalteter Erfassungsfläche 32b und den Gegenständen 12b gehört ein Programm Sb. Allein durch Auswechseln der Dekorschicht 30 und der Gegenstände 12 sowie der Programme für die Steuereinheit 14 können somit unterschiedliche Anwendungen mit nur einer Erfassungseinheit 10 und nur einer Steuereinheit 14 erfolgen. Die Programme Sa und Sb können in eigenen, zu den Berührschichten 30a und 30b gehörenden Programmeinheiten 16 gespeichert sein. Die Programme können auch auf den Berührschichten gespeichert und von einer Programmeinheit ausgelesen werden. Mit dem erfindungsgemäßen System ist es somit möglich, lediglich durch Zukauf von Berührschichten 30 mit darauf befindlichen Erfassungsflächen 32 und zugehöriger Programme sowie gegebenenfalls zusätzlicher Gegenstände die Anzahl möglicher Spiele ständig zu erweitern. Das erfindungsgemäße System ermöglicht Spiele wie Mensch ärgere dich, Mühle, Schach, Lernspiele, Geschicklichkeitsspiele usw.

Die Dekorschichten 30 sind einfach auswechselbar auf der Oberseite der Erfassungseinheit 10 angebracht, beispielsweise als Folien, die auf eine über der Funktionsschicht 26 angeordnete isolierende Schutzschicht aufgelegt werden oder unmittelbar auf eine nicht mit elektrisch leitfähigen Bereichen versehene Seite der Funktionsschicht 26. In einer produktionsorientierten Variante des erfindungsgemäßen Systems wird die Erfassungseinheit 10 am Ende des Produktionsprozesses individualisiert, indem auf der Dekorschicht 30 vorzugsweise mittels digitaler Drucktechnik ein die Erfassungseinheit 10 individualisierendes Dekor ausgebildet wird. Mit zugeordneten Figuren- bzw. Gegenstandspaketen lassen sich in Kombination mit einer Software SX unterschiedliche Spielevarianten herstellen. In einer kundenorientierten Variante kann der Kunde auswechselbare Dekorschichten 30 mit zugehörigen Softwarepaketen und Gegenstandspaketen kaufen.

Die optisch gestaltete Erfassungsfläche 32 (Figur 1) kann dreidimensional mit Erhebungen bzw. Vertiefungen, Wölbungen usw. ausgebildet sein.

Anhand der Figur 5 wird im Folgenden eine Erweiterungsmöglichkeit des erfindungsgemäßen Systems erläutert. Gemäß Figur 5a) weist eine Erfassungseinheit 10A längs eines Randes eine Reihe von Abstandssensoren 60A auf, deren Ausgangssignale von der Sendeeinheit 38A der Auswerteinheit 36A an die Steuereinheit 14 gesendet werden. Figur 5b) zeigt, wie eine weitere Erfassungseinheit 10B mit einem ebenfalls mit Abstandssensoren 60B versehenen Rand an den mit den Abstandssensoren 60A versehenen Rand der Erfassungseinheit 10A angelegt wird. Die Sendeeinheit 38B der Erfassungseinheit 10B sendet die Ausgangssignale der Abstandssensoren 60B ebenfalls an die Steuereinheit 14. Aufgrund der Anzahl und Lage der Abstandssensoren 60A der Erfassungseinheit 10A, die durch Anlage der Erfassungseinheit 10B aktiviert sind und der Anzahl und Lage der aktivierten Abstandssensoren 60B kann in der Steuereinheit 14 ein Bild der aneinandergelegten Erfassungsflächen 32A1 und 32B1 erzeugt werden, so dass für die Bewegung eines Gegenstandes 32 nunmehr beide Erfassungsflächen 32A und 32B verfügbar sind, die über ein Steuerprogramm zu einer gemeinsamen bespielbaren Gesamtfläche verbunden sind. Die "Spielfläche" ist somit erweitert. Es versteht sich, dass alle vier Ränder der Erfassungseinheiten 10 mit Abstandssensoren 60 versehen sein können, so dass die Erfassungsflächen 32 in beliebiger Weise aneinandergefügt werden können. In einer einfacheren Version kann nur ein Rand einer Erfassungseinheit 10 mit Abstandssensoren 60 versehen sein. Wenn an diesen Rand eine weitere Erfassungseinheit angelegt wird, reicht die Auswertung der Ausgangssignale der Abstandssensoren der einen Erfassungseinheit, um die relativ Positionen der Erfassungsflächen zu bestimmen und mit der Steuereinheit 14 anzuzeigen.

Die Abstandssensoren 60 können durch längs des Randes eine Erfassungsfläche 32A ausgebildeten Touchstreifen ersetzt sein. An einer jeweils anliegenden Seite der Erfassungsfläche 32B befindet sich ein kapazitiv wirkendes Gegenstück, so dass die relativ Positionen der Erfassungsflächen erkannt werden. Alternativ kann die relative Positionierung der aneinander anliegenden Erfassungsflächen mittels in die Ränder integrierten RFID- oder NFC-(Near Field Communication) Modulen erfasst werden.

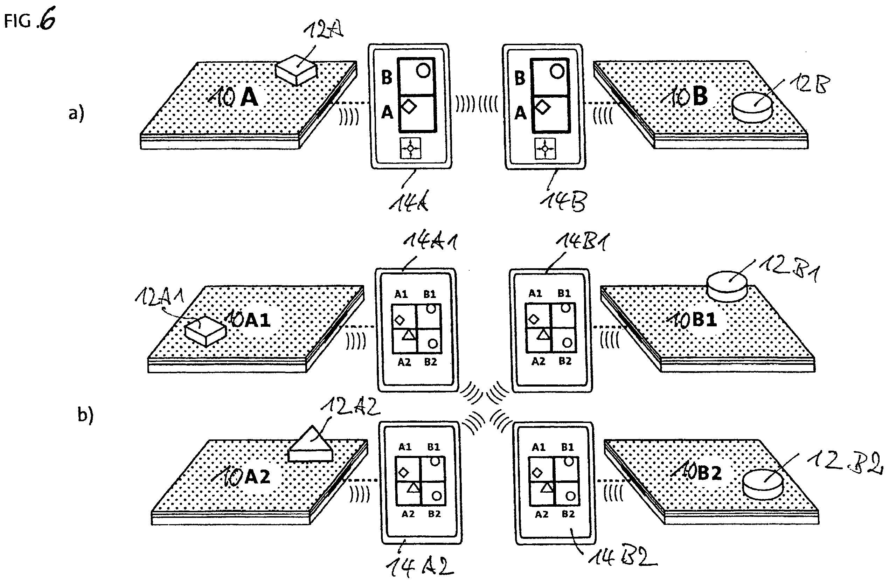

Anhand der Figur 6 wird erläutert, wie erfindungsgemäße Systeme an verschiedenen Orten benutzt werden können und miteinander kommunizieren:
Gemäß Figur 6a ist einer ersten Erfassungseinheit 10A eine erste Steuereinheit 14A zugeordnet. Einer zweiten Erfassungseinheit 10B ist eine zweite Steuereinheit 14B zugeordnet. Die beiden Steuereinheiten, beispielsweise Smartphones, kommunizieren beispielsweise über das Internet miteinander, so dass die Erfassungsfläche und der Gegenstand 12A in der Erfassungseinheit 10A auf dem Display der Erfassungseinheit 10B zusätzlich dargestellt werden und die Erfassungsfläche und der Gegenstand 12B der Erfassungseinheit 10B auf dem Display der Steuereinheit 14 zusätzlich dargestellt werden. Der Benutzer des Systems 10A, 14A und der Benutzer des Systems 10B, 14B können somit miteinander spielen, auch wenn sie voneinander entfernt sind.

Ein Anwendungsbeispiel ist folgendes:
Figur 6b) zeigt eine der Figur 6a) analoge Anordnung mit vier miteinander kommunizierenden Systemen A1, A2, B1, B2, die sich an voneinander entfernten Stellen befinden. Es versteht sich, dass die unterschiedlichen Systeme auch in einem gemeinsamen Raum angeordnet sein können.

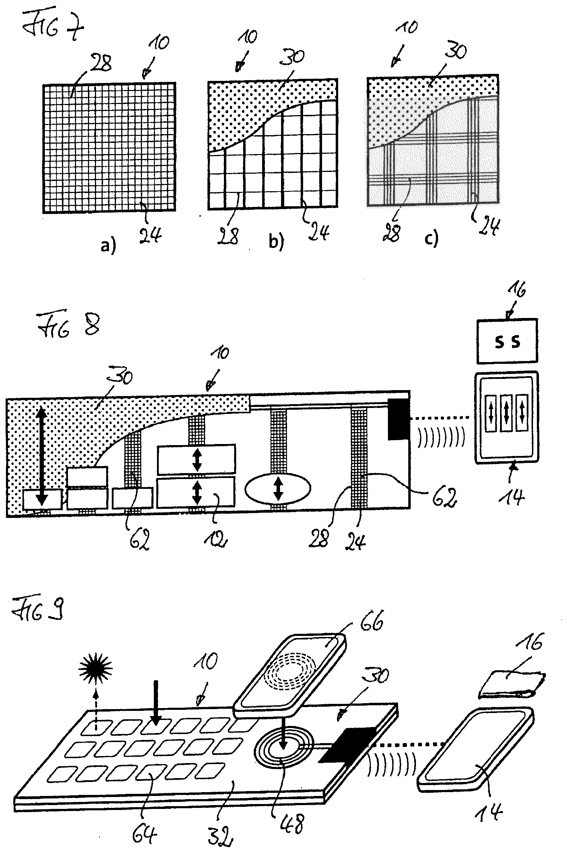

Figur 7 zeigt schematische Aufsichten auf drei verschiedene Ausführungsformen von Erfassungseinheiten 10, wobei in Figur 7a) die Dekorschicht 30 nicht dargestellt ist und in den Figuren 7b) und 7c) die Dekorschicht 30 nur teilweise dargestellt ist.
Figur 7a) zeigt eine bauliche Ausführung, bei der die Stärke der Elektroden bzw. Leiter 24, 28 der Funktionsschichten gering ist, beispielsweise nur 4-20 µm beträgt. Der Abstand zwischen den Leitern beträgt beispielsweise 5-10 µm. Mit dieser Ausbildung wird erreicht, dass die Leiter durch durchsichtige Bereiche der Dekorschicht 30 hindurch nicht oder nur kaum erkannt werden. Außerdem können auf der Erfassungsfläche befindliche Gegenstände mit guter Auflösung erkannt werden.
Figur 7b) zeigt eine Ausführung, bei der die Leiter 24, 28 dicker und weiter voneinander entfernt sind. Dadurch ist die Anzahl der Erfassungspunkte pro Fläche deutlich verringert. Die Breite der Leiter beträgt beispielsweise 10 µm bis 1,5 mm. Der Abstand zwischen den Leitern beträgt beispielsweise 1 mm bis 10 mm. Entsprechend können mit einem Prozessor, wie er für die Ausführungsform gemäß Figur 7a verwendet wird, große Flächen, allerdings mit geringerer Auflösung, ausgewertet werden. Es versteht sich, dass zur Auswertung mehrere Prozessoren, die jeweils einen Teil der Erfassungsfläche auswerten, miteinander vernetzt werden können.
Figur 7c) zeigt eine Ausführung, bei der die elektrischen Leiter 24, 28 der Funktionsschichten jeweils in voneinander beabstandeten Gruppen 61 angeordnet sind, so dass im Kreuzungsbereich der Gruppen befindliche Flächenbereiche mit großer Genauigkeit ausgewertet werden können, wohingegen dazwischen liegende Bereiche nicht ausgewertet werden können.
Figur 8 zeigt eine schematische Aufsicht auf eine Erfassungseinheit 10, bei der die elektrischen Leiter 24, 28 der Funktionsschichten einzelne nebeneinander angeordnete Streifen 62 bilden. Vorteilhaft sind auf der Dekorschicht 30 den Streifen 62 entsprechende Felder visualisiert. Auf diese Weise lassen sich beispielsweise auf einer Regalfläche Gegenstände 12, die über den Streifen 62 angeordnet sind, erfassen, so dass der Belegungszustand des Regals bestimmt werden kann.
Figur 9 zeigt eine perspektivische Ansicht einer Erfassungseinheit 10. Die Dekorschicht 30 bzw. deren Erfassungsfläche 32 ist lediglich mit markierten Feldern 64 versehen. Über die Steuereinheit 14 lassen sich durch Antippen eines jeweiligen Feldes 64, beispielsweise mit einem Finger, Funktionen zuordnen, die in der Programmeinheit 16 gespeichert werden können. So kann beispielsweise eine Schreibtastatur oder ein komplexes Bedienfeld zum Bedienen unterschiedlichster Einheiten erzeugt werden. Weiter ist die Erfassungseinheit 10 mit einer Antenne 48 versehen, über die der Erfassungseinheit 10 von einer externen Einheit 66, beispielsweise einem Smartphone, elektrische Energie zugeführt werden kann.

In Weiterbildung der Ausführungsform gemäß Figur 9 können auf der Erfassungseinheit 32 erst bei deren Inbetriebnahme die markierten Felder beispielsweise mit einem Zeichenstift erzeugt werden, dessen Positionen von der Steuereinheit 14 erfasst und, sobald der Stift einen Flächenbereich umfahren hat und eine geschlossene Linie zurückgelegt hat, mit Hilfe eines in der Steuereinheit 14 oder der Programmeinheit 16 abgelegten Programms als ein Bedienfeld definiert werden. Diesem Bedienfeld können beispielsweise durch Zeichnen eines dem Programm bekannten Symbols Befehle zugeordnet werden, die dann ausgeführt werden, sobald sich ein Finger auf das Bedienfeld bewegt. Auf diese Weise kann die gesamte Grafik des Bedienfeldes bzw. das Dekor der Dekorschicht 30 benutzerindividuell gestaltet werden.

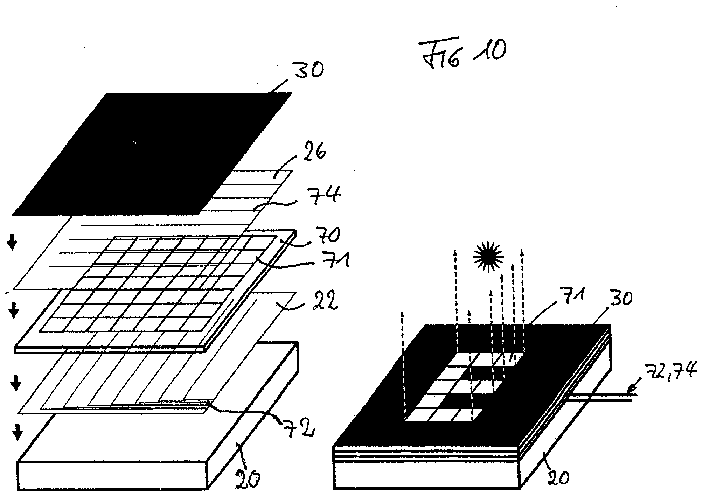

Figur 10 zeigt einen Ausschnitt einer der Figur 1b) ähnlichen Anordnung, wobei die Dekorschicht 30, die Funktionsschichten 22 und 26 und die Trägerschicht 20 jeweils Bereiche der jeweiligen Schichten der Figur 1b) bilden. Der dargestellte Bereich der Dekorschicht 30 ist, obwohl schwarz dargestellt, durchsichtig bzw. durchscheinend. Zwischen der ersten Funktionsschicht 22 und der zweiten Funktionsschicht 26 ist eine OLED-Schicht 70 angeordnet, die in einzelne Segmente 71 aufgeteilt ist. Die Funktionsschichten 22 und 26 weisen schematisch dargestellte Kontaktierungsleitungen 72 und 74 auf, deren eine Enden jeweils mit voneinander abgewandten Seiten eines der Segmente 71 elektrisch leitend verbunden sind und deren andere Enden von der Auswerteinheit 36 (Figur 1) gesteuert mit Spannung beaufschlagbar sind. Die Auswerteinheit 36 enthält zusätzlich eine Empfangseinheit, die Signale zur Ansteuerung der OLED Segmente von der zugehörigen Steuereinheit 14 (Figur 1) empfängt. Bei entsprechender zumindest teiltransparenter

Ausbildung der Dekorschicht 30 bzw. Erfassungsfläche 32 kann die Erfassungsfläche entsprechend dem im Steuergerät aktivierten Programm selektiv beleuchtet werden, wie aus dem rechten Teil der Figur 10, der die Anordnung in perspektivischer Darstellung zeigt, ersichtlich. Die OLED-bildenden Schichtbereiche können in einem digitalen Herstellprozess zusammen mit den Funktionsbereichen des Touchpads hergestellt werden bzw. in diese integriert sein.

Statt der in Fig. 1 schematisch dargestellten zwei Verbindungsleitungen pro Funktionsschicht 22, 26 zur Verbindung entgegengesetzter Enden jedes Leiters 24, 28 mit der Auswerteinheit 36 kann auch nur eine Verbindungsleitung pro Funktionsschicht 22, 26 vorgesehen sein, die mit auf der gleiche Seite liegenden Enden der jeweiligen Leiter 24, 28 einer Funktionsschicht 22, 26 verbunden ist.

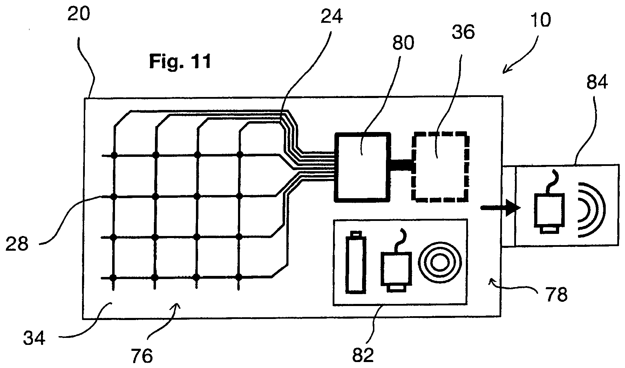

In den Fig. 11 bis 22 sind weitere Ausführungsformen von Erfassungseinheiten 10 dargestellt. Da deren Aufbau grundsätzlich ähnlich zu dem der ersten Ausführungsform ist, werden lediglich Unterschiede beschrieben und gilt, soweit nicht anders beschrieben, das oben Gesagte auch bezüglich der weiteren Ausführungsformen. Gleiche oder ähnliche Bauteile werden mit den gleichen Bezugszeichen bezeichnet.

In Fig. 11 ist keine Dekorschicht dargestellt. Die Erfassungseinheit 10 gemäß der weiteren Ausführungsform in Fig. 11 weist eine Trägerschicht 20 auf, die schematisch in einen Touchpadbereich 76 und einen Modulbereich 78 unterteilt ist. In dem Touchpadbereich 76 sind in Y-Richtung verlaufende Leiter 24 und in X-Richtung, die senkrecht zu der Y-Richtung ist, verlaufende Leiter 28 vorgesehen. In dem Modulbereich 78 ist ein Prozessormodul bzw. Controller 80, der mit den Leitern 24, 28 verbunden ist, und eine Auswerteinheit 36, die mit dem Prozessormodul 80 verbunden ist, vorgesehen. Weiter ist in dem Modulbereich 78 ein Energieversorgungsmodul 82 vorgesehen, welches zur Energieversorgung des Prozessormoduls 80 und der Auswerteinheit 36 dient und mit diesen ebenfalls verbunden ist (nicht gezeigt). Weiter ist ein Kommunikationsmodul 84 vorgesehen, das zur Kommunikation zwischen Auswerteinheit 36 und/oder Prozessormodul 80 und externen Geräten dient und mit diesen und dem Energieversorgungsmodul 82 ebenfalls verbunden ist.

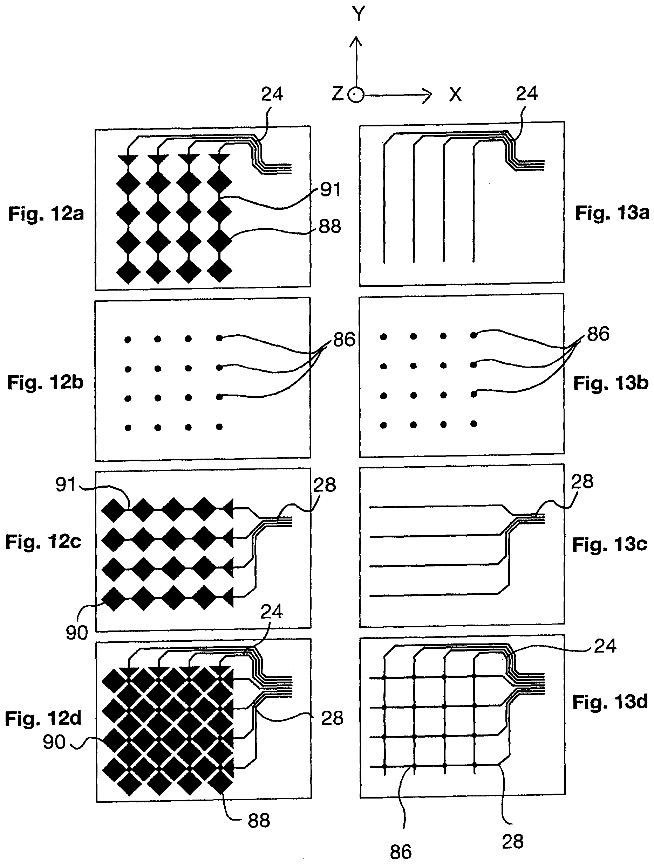

Bevorzugt werden der Touchpadbereich 76 und wenigstens Teile des Modulbereichs 78 mittels eines elektronisch steuerbaren Tröpfchendruckverfahrens (Inkjet), wie es auch oben bezüglich der anderen Ausführungsformen beschrieben ist, hergestellt. Figs. 13a bis 13d zeigen Aufsichten auf Tintenstrahldruckmuster zum Ausbilden des in Fig. 11 gezeigten Leiterbahn-Designs mit linienförmigen elektrischen Leitern 24, 28 auf der Trägerschicht 30 bzw. einem die Trägerschicht bildenden Bauteil. Jede der Figuren 13a bis 13d zeigt schematisch das Inkjetmuster für den Fall, dass einzelnen Schichten nacheinander aufgebracht werden. Es werden also, wie es in Fig. 12a gezeigt ist, in dem Touchpadbereich 76 zuerst (als unterstes) die in der Y-Richtung parallel verlaufenden Leiter aus einem elektrisch leitfähigen Material auf die Trägerschicht 20 aufgespritzt. Im zweiten Schritt, der in Fig. 13b gezeigt ist, werden Isolierbereiche bzw. Isolierschichten 86 aus isolierendem Material mindestens auf die Bereiche der Leiter 24 aufgespritzt, die in dem nächsten Schritt von den Leitern 28, die in der X-Richtung verlaufen, überdeckt werden. Die Isolierbereiche bzw- -schichten 86 sind beispielhaft als flächige punktförmige oder kreisflächige Bereiche dargestellt, können aber in Anpassung an die voneinander zu isolierenden Leiter bzw. der zu isolierenden Leistung jegliche Form und/oder Dicke haben. In dem in Fig. 13c gezeigten dritten Schritt werden die in X-Richtung parallel verlaufenden Leiter 28 aus elektrisch leitendem Material aufgespritzt, und zwar so, dass sie über die Isolierbereiche 86 verlaufen. Mittels der Isolierbereiche 86 wird eine Isolation der Leiter 24 zu den Leitern 28 erreicht. Auf der Trägerschicht 20 ist somit ein Gitter aus zueinander isolierten Leitern 24, 28 ausgebildet (Fig. 13d). Die in den Figuren 13a bis 13c gezeigten Schritte können mittels moderner Tintenstrahldruckverfahren auch in einem Arbeitsgang, bei dem die verschiedenen Materialien (Leiter-Isolator-Leiter) unmittelbar hintereinander aufgespritzt werden, hergestellt werden. Die in der ersten Ausführungsform beschriebenen Funktionsschichten 22, 26 und die Isolierschicht 29 aus Folienmaterial sind in dieser Ausführungsform nicht erforderlich. Die Anordnung der Leiter kann beliebig variiert werden. Die einzelnen Leiter 24, 28 sind über separate oder gemeinsame Verbindungsleitungen (mindestens eine Verbindungsleitung für die in der X-Richtung verlaufenden Leiter und eine Verbindungsleitung für die in der Y-Richtung verlaufenden Leiter) mit einem nicht dargestellten Anschlussbereich oder direkt mit dem Prozessormodul 80 oder der Auswerteinheit 36 verbunden. Bevorzugt wird zum Schutz der Leiter zuletzt eine die Leiter vollständig überdeckende Isolierschicht auf dieselben aufgedruckt oder aufgebracht (Folie).

Das Prozessormodul 80, die Auswerteinheit 36, das Energieversorgungsmodul 82 und das Kommunikationsmodul 84 können bevorzugt ebenfalls vollständig oder teilweise mittels Tintenstrahldruckverfahren hergestellt werden. Die Verbindung untereinander und mit den Leitern 24, 28 erfolgt über ebenfalls gedruckte oder anderweitig hergestellte leitende Verbindungen. Einzelne oder alle Module bzw. die Auswerteinheit 36 können alternativ auch extern vorgesehen sein und lediglich über einen Anschlussbereich mit den Leitern 24, 28 verbunden sein. In einem Anschlussbereich liegen die Leiter oder Verbindungsleitungen zur Oberfläche derart offen, dass durch Aufdrücken von leitenden Abnehmern (nicht gezeigt) eine elektrisch leitende Verbindung hergestellt wird. In der dargestellten Ausführungsform ist das Prozessormodul 80 mit den Leitern bzw. Verbindungsleitungen beispielsweise über Klebstoff oder über eine verpresste Elastikverbindung oder durch direkte Kontaktierung elektrisch leitend verbunden.

Das Prozessormodul 80 hat die Funktion, die Position einer Eingabe (Berührung) auf der nicht dargestellten Dekorschicht bzw. Erfassungsfläche im Touchpadbereich 76 auf bekannte Weise zu erkennen. Die Auswerteinheit 36 kann die Information nach vorbestimmten Vorgaben ausfiltern und einem Rechenprozess über das Kommunikationsmodul 84 zuleiten. Die Auswerteinheit 36 kann alternativ Teil eines Rechners oder Smartphones sein, die mit dem Prozessormodul 80 über das Kommunikationsmodul 84 kommunizieren.

Zur Energieversorgung des Prozessors 80 und/oder der Auswerteinheit 36 weist das Kommunikationsmodul 84 eine Batterie, einen Akku, einen Anschlussbereich und/oder eine Antenne auf. Statt einer autarken Energieversorgung über Batterie oder Akkumulator oder zur Aufladung eines Akkus kann beispielsweise eine leitungsgebundene Energieversorgung über dem Anschlussbereich (nicht dargestellt) vorgesehen sein. Alternativ oder zusätzlich kann Energie drahtlos über Induktion mittels der Antenne zugeführt werden.

Die Kommunikation mit Rechnern, wie PCs, Smartphones/Tablets oder Netzwerken wird über das Kommunikationsmodul 84 hergestellt, welches beispielsweise ebenfalls eines Anschlussbereich zur leitungsgebundenen Kommunikation und/oder eine Antenne zur drahtlosen Kommunikation aufweist. Das Prozessormodul 80, die Auswerteinheit 36, das Energieversorgungsmodul 82 und/oder das Kommunikationsmodul 84 sind beispielsweise über Kabelverbindungen oder über ebenfalls auf der Trägerschicht 20 aufgedruckte Leiter miteinander verbunden (nicht dargestellt).

Es wird damit ein Touchpad 34 angegeben, das zum Großteil oder sogar vollständig durch Tintenstrahldruck unmittelbar auf der Trägerschicht 20 oder einem entsprechenden Bauteil ausgebildet werden kann, ohne dass entsprechende Funktionsschichten vorhanden sein müssen. Wie später beschrieben werden wird, kann mittels einer mindestens im Touchpadbereich 76 auf die Leiterbahnen 24, 28 aufgebrachten Dekorschicht auch ein Höhenausgleich zwischen Leiterbahnen 24, 28 und Trägerschicht 20 erreicht werden, so dass die Leiterbahnen 24, 28 und ggfs. auch die Module von oben weder haptisch noch optisch erfassbar sind.

Über das Kommunikationsmodul kann beispielsweise über ein Programmiergerät (Mobiltelefon) die Tastenbelegung des Touchpads eingestellt werden oder kann das Touchpad als Eingabegerät für ein externes Gerät (Mobiltelefon) verwendet werden.

Figuren 12a bis 12d zeigen Aufsichten auf Tintenstrahldruckmuster zum Ausbilden eines alternativen Leiterbahn-Designs mit flächigen Leiterbereichen. In dieser Ausführungsform sind die als gerade Linien ausgebildeten Leiter 24, 28 der in Fig. 13a bis 13d gezeigten Ausführungsform durch in Y-Richtung miteinander verbundene flächige Leiterbereiche 88 und in X-Richtung miteinander verbundene flächige Leiterbereiche 90 ausgebildet. In einem ersten Schritt werden hierfür, wie es in Fig. 12a gezeigt ist, mehrere parallel in Y-Richtung verlaufende Reihen von flächigen Leiterbereichen 88 ausgebildet (gedruckt), wobei jeder flächige Leiterbereich als ein Quadrat ausgebildet ist, bei dem zwei gegenüberliegende Eckpunkte auf einer in Y-Richtung verlaufenden Linie liegen. Die einzelnen quadratisch flächigen Leiterbereiche 88 sind an denselben Eckbereichen miteinander zu einer in Y-Richtung verlaufenden Reihe verbunden. In der vorliegenden Ausführungsform sind die jeweiligen Ecken über linienförmige Verbindungsbereiche 91 miteinander verbunden. Somit ergeben sich mehrere parallele Reihen von in Y-Richtung hintereinander angeordneten und miteinander verbundenen quadratischen flächigen Leiterbereichen 88.

In dem in Fig. 12b gezeigten zweiten Schritt werden, wie auch bei der in Fig. 13a bis 13d gezeigten Ausführungsform Isolierbereiche 86 an den Stellen aufgebracht, an denen die in Y-Richtung verlaufenden Leiter 24 später von den in X-Richtung verlaufenden Leitern 28 überdeckt werden. Bei der Ausbildung mit flächigen Leiterbereichen, wie es in den Figuren 12a bis 12d gezeigt ist, sind die Isolierbereiche 86 bevorzugt auf die linienförmigen Verbindungsbereiche 91 zwischen den einzelnen flächigen Leiterbereichen 88 aufzubringen. Wie in Fig. 12c gezeigt, werden in einem dritten Schritt den in Y-Richtung verlaufenden Leitern 24 mit ihren flächigen Leiterbereichen 88 entsprechende in X-Richtung verlaufende Leiter 28 mit flächigen Leiterbereichen 90 aufgebracht, wobei die ebenfalls quadratisch flächigen Leiterbereiche 90 nunmehr in X-Richtung miteinander über linienförmige Verbindungsbereiche 91 verbunden sind. Die Verbindungsbereiche 91 der flächigen Leiterbereiche 90 liegen dabei auf den Isolierbereichen 86 auf, so dass die Leiter 24, 28 voneinander isoliert sind

Das in Fig. 12d dargestellte fertige Touchpad 34 weist somit, wie auch in den vorherigen Ausführungsformen, senkrecht zueinander verlaufende Leiter 24 und 28 auf, die zueinander über die Isolierbereiche 86 isoliert sind. Wie aus dem Vergleich der Figuren 13d und 12d ersichtlich ist, wird bei der in Fig. 12d gezeigten Ausführungsform eine wesentlich größere Flächenabdeckung durch leitfähige Bereiche erreicht. Aus diesem Grund kann die Empfindlichkeit und Erfassungsgenauigkeit eines Touchpads 34 mit einem Leiterbahn-Design mit flächigen Leiterbereichen 88, 90 gemäß Fig. 12d gegenüber dem in Fig. 13d erhöht sein. Die Form der flächigen Leiterbereiche kann beliebig variiert werden.

In den Figuren 14a und 14b sind zwei Querschnittsansichten des in Fig. 14c gezeigten Leiterbahn-Designs mit quadratischen flächigen Leiterbereichen 88, 90 gezeigt. Fig. 14a stellt dabei eine in Z- und X-Richtung verlaufende Schnittfläche senkrecht zur Y-Richtung im Bereich eines der Leiter 28 und Fig. 14b eine in Z- und Y-Richtung verlaufende Schnittfläche senkrecht zur X-Richtung im Bereich eines der Leiter 24 dar. Da der Leiter 24 bzw. die Isolierbereiche 86 in dieser Ausführungsform vor dem Leiter 28 auf die Trägerschicht 20 aufgebracht wird, ist der Leiter 24 in Bereichen, in denen zwei Leiter sich schneiden (übereinander angeordnet sind) jeweils der untere Leiter. Zur Isolierung der beiden Leiter 24, 28 zueinander sind in Bereichen, in denen zwei Leiter 24, 28 übereinander angeordnet sind, die hier beispielhaft punktförmigen bzw. kreisrunden flächigen Isolierbereiche bzw. Isolierschichten 86 vorgesehen. Die in den Figuren 14a und 14b gezeigten Erhebungen aufgrund er übereinander angeordneten Schichten können durch nachträglich aufgebrachte Ausgleichsschichten, wie beispielsweise die Dekorschicht ausgeglichen bzw. geglättet werden.

Die Figuren 15 bis 19 zeigen weitere Bauvarianten für einen Schichtaufbau des Touchpads 34 bzw. der Erfassungseinheit 10. In den genannten Figuren sind Dekorschichten mit dem Bezugszeichen 30 versehen. Wie es in Fig. 15 gezeigt ist, weist eine Dekorschicht 30 bevorzugt eine Primerschicht 92, eine Abdeckschicht 94, einen Dekordruck 96 und eine bevorzugt klare Deckschicht 98 auf, wobei die Primerschicht 92, die Abdeckschicht 94 und die Deckschicht 98 lediglich bevorzugt vorhanden sind. Die Primerschicht 92 dient zur besseren Haftung der nachfolgenden Abdeckschicht 94 oder des Dekordrucks 96 an der Trägerschicht 20 bzw. den auf die Trägerschicht aufgebrachten Leiterbahnen 22, 24 oder möglichen Isolationsschichten und/oder Modulen oder Funktionsschichten 22, 26. Zur besseren Darstellungen von Farben und zur besseren Überdeckung der Leiter 24, 28 wird vor dem Aufbringen des Dekordrucks 96 bevorzugt die bevorzugt weiße oder hellfarbige Abdeckschicht 94 aufgebracht. Auf die Abdeckschicht wird anschließend der Dekordruck 96 aufgebracht. Der Dekordruck 96 kann, wie bezüglich der ersten Ausführungsform ausführlich beschrieben, neben einem farblichen Dekor auch oder alternativ ein haptisch erfassbares Dekor, also eine Reliefoberfläche ausbilden. Auf dem Dekordruck 96 wird bevorzugt eine Deckschicht 98 aufgebracht. Mit der Deckschicht 98 kann der Dekordruck 96 geschützt werden. Weiter können, falls eine glatte Oberfläche gewünscht ist, mit der Deckschicht 98 jegliche Unebenheiten, die beispielsweise auch durch die Leiter 24, 28 entstehen, ausgeglichen bzw. geglättet werden. Alle genannten Schichten können mittels Inkjetverfahren in einem oder mehreren Arbeitsgängen ausgebildet werden.

In Fig. 16 ist eine Ausführungsform gezeigt, bei der auf eine untere erste Trägerschicht 20 die aus der ersten Ausführungsform bekannte Kombination von erster Funktionsschicht 22 und zweiter Funktionsschicht 26 mit dazwischen angeordneter Isolierschicht 29 aufgebracht ist. Gemäß einer ersten Alternative von Fig. 16 (linke Seite) ist auf der obersten Funktionsschicht 26 eine zweite Trägerschicht 20 fest oder auswechselbar aufgebracht, auf die bevorzugt bereits vorher eine Dekorschicht 30 aufgebracht ist. Gemäß der zweiten Alternative (rechte Seite) von Fig. 16 kann die Dekorschicht 30 direkt, wie es auch in der ersten Ausführungsform gezeigt ist, auf der zweiten Funktionsschicht 26 fest (nicht von den Ansprüchen abgedeckt) oder wechselbar vorgesehen sein. In der zweiten Alternative sollte die Dekorschicht 30, wenn sie auswechselbar sein soll, selbsttragend ausgebildet sein. Die erste Alternative von Fig. 16 hat den Vorteil, dass die Dekorschicht auf eine definierte glatte Oberfläche der zweiten Trägerschicht 20 aufgebracht werden kann und mehrere auswechselbare zweite Trägerschichten 20 mit darauf aufgebrachter Dekorschicht 30 vorgesehen sein können, die je nach Bedarf auf die erste Trägerschicht 20 mit darauf aufgebrachter erster Funktionsschicht 22, Isolierschicht 29 und zweiter Funktionsschicht 26 aufgebracht oder aufgesetzt werden können. Dies hat zum einen den Vorteil, dass eine universale Trägerschicht mit Touchpad unabhängig von modular ausgebildeten Dekorschichten 30 hergestellt werden kann bzw. ein und dieselbe Trägerschicht 20 mit Touchpad für verschiedene Dekors verwendet werden kann.

Fig. 17 zeigt eine weitere Ausführungsform (die nicht alle beanspruchten Merkmale offenbart), bei der das Touchpad 34 aus Dekorschicht 30, erster Funktionsschicht 22, Isolierschicht 29 und zweiter Funktionsschicht 26 auf der Unterseite eines vollständig oder teilweise transparenten Materials 100 (beispielsweise Acryl, Glas etc.) in der angegebenen Reihenfolge vorgesehen ist. Mit dem vollständig transparenten oder teilweise transparenten Material 100 kann eine sich im Wesentlichen nicht abnutzende Erfassungsfläche 32 hoher Güte für das Touchpad 34 geschaffen werden, durch die hindurch das Dekor der Dekorschicht 30 sichtbar ist, auf deren Rückseite die Funktionsschichten 22, 26 zur Erfassung einer Eingabe vorgesehen sind.

Fig. 18 zeigt in einer ersten Alternative (linke Seite) eine auf der Unterseite einer ersten Trägerschicht 20 vorgesehene zweite Funktionsschicht 26, Isolierschicht 29 und erste Funktionsschicht 22 und eine auf der Oberseite der ersten Trägerschicht 20 fest oder wechselbar vorgesehene zweite Trägerschicht 20, auf der eine Dekorschicht 30 vorgesehen ist. Alternativ (rechte Seite) kann die Dekorschicht 30 auch unmittelbar auf der ersten Trägerschicht 20 fest (nicht von den Ansprüchen abgedeckt) oder wechselbar vorgesehen sein.

Bei der in Fig. 19 gezeigten Ausführungsform ist eine zweite Funktionsschicht 26 auf der Unterseite einer ersten Trägerschicht 20, eine zweite Trägerschicht 20 auf der Unterseite der zweiten Funktionsschicht 26 und eine erste Funktionsschicht 22 auf der Unterseite der zweiten Trägerschicht 20 vorgesehen. Auf dieses System aus Funktionsschichten 22, 26 und Trägerschichten 22, 26 ist fest oder wechselbar auf der Oberseite der ersten Trägerschicht 20 eine dritte Trägerschicht 20 mit darauf aufgebrachter Dekorschicht 30 vorgesehen. Alternativ (rechte Seite) ist die Dekorschicht 30 unmittelbar fest (nicht von den Ansprüchen abgedeckt) oder wechselbar auf der Oberseite der ersten Trägerschicht 20 vorgesehen.

Wie es symbolisch in Fig. 20 dargestellt ist, können die in den Figuren 1 bis 19 dargestellten Kombinationen aus Funktionsschichten und Trägerschichten mit Dekorschichten oder Trägerschichten mit direkt darauf aufgespritzten Leiterbahnen beliebige Formen annehmen. Die Trägerschichten können durch beliebige Bauteile ausgebildet werden.

Fig. 21 zeigt eine weitere Ausführungsform einer Erfassungseinheit 10. In der in Fig. 21 dargestellten Aufsicht auf eine solche Erfassungseinheit 10 ist lediglich die Dekorschicht (Dekor) 30 bzw. Erfassungsfläche 32 sichtbar, unter der im gesamten Bereich elektrische Leiter 24, 28 entsprechend der obigen Ausführungsformen zur Erfassung einer Eingabe angeordnet sind. Die weiteren Module (Prozessor etc.) sind ebenfalls nicht dargestellt und können unter den Leitern oder neben diesen oder extern vorgesehen sein. Die Dekorschicht 30 bzw. das Dekor 30 weist einen Ziffernblockbereich 102 auf, in dem ein typischer Ziffernblock zur Eingabe von Ziffern und/oder Buchstaben dargestellt ist, einen Schiebereglerbereich 104, mittels dem eine Auswahl zwischen zwei Endpunkten, beispielsweise die Einstellung einer Lautstärke zwischen Maximum und Minimum möglich ist, Funktionstastenbereiche 106 für vorbestimmte Funktionen, in denen entsprechende Funktionssymbole bereits dargestellt sind, und freibelegbare Funktionstastenbereiche 108, die teilweise mit exemplarischen Symbolen versehen sind, als Tasten und/oder Schalter auf. Einzelne oder alle Tasten können durch entsprechende Beleuchtungsmittel illuminiert werden.

Wie aus Fig. 21 ersichtlich ist, kann ein beliebiges mit den oben genannten Verfahren, bevorzugt mittels Inkjet, hergestelltes Touchpad auf/unter einer beliebigen Oberfläche (Trägerschicht) ausgebildet werden und mit einem beliebigen Dekor versehen werden. Die durch das Dekor bestimmten Eingabebereiche (Tasten/Schalter) können softwareseitig und/oder hardwareseitig fest oder variabel programmiert werden (oder umgekehrt), so dass bei einer Erfassung einer Eingabe im Bereich eines Schalters bzw. einer Taste eine dem Schalter bzw. der Taste entsprechende Funktion ausgeführt wird. Es kann also mittels immer auf die gleiche Weise hergestellten Touchpads eine beliebige Anzahl an verschiedenen Schaltertafeln oder Tastenfelder etc. hergestellt werden, welche beliebig an die Bedürfnisse der Kunden angepasst werden können. Durch die Herstellung im Tintenstrahlverfahren ist eine Just-in-Sequence Herstellung ohne Vorlauf direkt im Produktionsprozess möglich.

Die Bereiche und/oder Empfindlichkeiten in bzw. mit denen eine Eingabe erfasst wird, können ebenfalls frei festgelegt werden (ist der im Dekor gezeigte Schalter oder die Taste genau zu treffen oder sind Bereiche um den Schalter oder die Taste herum ebenfalls zur Eingabe geeignet). Die freibelegbaren Funktionstastenbereiche 108 können beispielsweise durch einen Nutzer mit gewünschten Favoritenfunktionen (Sitzposition, Anruf, Musiktitel etc.) belegt werden.

Wie es beispielhaft aus Fig. 21 ersichtlich ist, können somit mit einer Erfassungseinheit, wie sie in den vorigen Ausführungsformen ausführlich beschrieben wurde, verschiedenste Funktionen durch Variieren der Dekorschicht und entsprechende Programmierung der Erfassungsbereiche im Touchpad ausgebildet werden. Der funktionelle Bereich der Erfassungseinheit zum Ausbilden eines Touchpads kann dabei im Wesentlichen immer gleich hergestellt werden.

Zur Anwendung kommen solche Bedienfelder beispielsweise in Interieur-Oberflächen von Fahrzeugen, Flugzeugen oder in Bedienfeldern von Maschinen oder Anlagen. Der Oberfläche lässt sich hierbei ein spezifisches Dekor zuordnen wobei die Touchfunktion als Bestandteil der Dekoroberfläche fungiert.

Figuren 22a und 22b zeigen eine weitere Anwendung für eine Erfassungseinheit gemäß der vorliegenden Offenbarung. Beispielsweise können auf der Dekorschicht 30 einer Erfassungseinheit 10 verschiedenartige Eingabebereiche vorgesehen sein. In Fig. 22b ist auf der rechten Seite ein mit V markierter Ziffernblockbereich 102 dargestellt, ein mit K2 markierter Freihandeingabebereich 114 und ein mit K1 markierter Codekartenbereich 112 dargestellt. Zur Authentifizierung eines Nutzers kann es beispielsweise vorgesehen sein, dass zuerst eine Codekarte 112 (die ein beliebiger Gegenstand sein kann), wie sie in Fig. 22a und 22b gezeigt ist, auf den Codekartenbereich 110 der Erfassungseinheit 10 aufgelegt werden muss. Eine solche Codekarte kann beispielsweise verschiedene Flächenbereiche aus unterschiedlich dicken und/oder unterschiedlich geformten und/oder unterschiedlich gemusterten Metallschichten und/oder Metallschichten mit verschiedenen Kapazitäten aufweisen, die in der Erfassungseinheit 10, wie beispielsweise auch bezüglich der ersten Ausführungsform beschrieben, erkannt werden können. Zusätzlich oder alternativ können einzelne metallische Flächenbereiche der Codekarte oder eines beliebigen Gegenstandes unterschiedlich stark mit Ladungen mit verschiedenen Polaritäten dotiert sein, wodurch ebenfalls eine Codierung erfolgen kann. Die Codekarte lässt sich somit über Anordnungsmuster, Dicke, Form, Dotierung (Stärke der Aufladung), Polarisierungsrichtung, etc. mit beinahe unendlich vielen Codes kodieren. Alternativ können über Anordnungsmuster, Dicke, Form, Dotierung etc. auch relativ viele Daten (Gegenstandsdaten) in einer solchen Karte gespeichert sein. In dem Freihandeingabebereich 114 kann anschließend von einem Nutzer beispielsweise eine vorbestimmte Figur oder Unterschrift eingegeben werden. In dem Ziffernblockbereich 102 kann weiter eine Codeeingabe erfolgen. Wie aus dieser Ausführungsform somit auch ersichtlich ist, können mittels ein und desselben Touchpads verschiedenartigste Eingaben erfasst werden, ohne dass hierfür jeweils separate Erfassungseinheiten vorgesehen werden müssen, wie es im Stand der Technik bekannt ist.

In Fig. 23 ist eine weitere Ausgestaltung einer Erfassungseinheit 10 gezeigt, bei der über dem auf eine Trägerschicht 20 aufgebrachten System aus erster Funktionsschicht 22, Isolierschicht 29 und zweiter Funktionsschicht 26 eine zumindest bereichsweise elastisch ausgebildete Schicht 116 vorgesehen ist. Die bereichsweise elastische Schicht 116 kann bevorzugt ebenfalls in einem Inkjetverfahren auf der oberen Funktionsschicht 26 ausgebildet sein. Alternativ kann die Schicht auf herkömmliche Weise ausgebildet werden und in geeigneter Weise auf dem oben genannten System befestigt werden. Die bereichsweise elastische Schicht weist auf ihrer Oberseite und/oder Unterseite (beispielsweise bei transparenter elastischer Schicht) bevorzugt ein entsprechendes Dekor auf, mittels dem beispielsweise Schalterbereiche oder Tastenbereiche gemäß Fig. 21 dargestellt werden können. Bevorzugt sind die Schalter- bzw. Tastenbereiche auch dreidimensional haptisch erfassbar ausgebildet, beispielsweise durch entsprechende Ausformungen von Schaltern und/oder Tasten. Das Ansprechverhalten der Schalter/Tasten kann über die Materialstärke, Elastizitätseigenschaften und/oder entsprechende Form des jeweiligen Tasten-/Schalterbereichs in der bereichsweise elastischen Schicht und eine entsprechende Programmierung bestimmt werden.

Bei den in den Figuren 16 bis 19 und 23 gezeigten Ausführungsformen können die erste und zweite Funktionsschicht 22, 26 und die Isolierschicht 29 durch die bezüglich der Figuren 11 bis 13 beschriebene Ausbildung des Touchpads (unmittelbar mittels Inkjet aufgebrachte Leiter 24, 28 und Isolierbereiche 86) ersetzt werden.

In einer weiteren Ausgestaltung, die für sich genommen nicht von den Ansprüchen abgedeckt ist, kann das Touchpad 34 beispielsweise druckelastisch ausgebildet sein, so dass es auch das Gewicht auf ihm befindlicher Gegenstände erfasst.

In einer weiteren Ausgestaltung, die für sich genommen nicht von den Ansprüchen abgedekct ist, können die oben beschriebenen Touchpads auch für Touchpads mit homogener Berührschicht vorgesehen sein, d.h., die Berührschicht kann optisch und haptisch über ihre gesamte Ausbreitung gleich sein. Eine solche homogene Berührschicht kann mittels herkömmlicher Verfahren oder mittels Tintenstrahl hergestellt werden. Eine homogene Berührschicht kann mit mittels Tintenstrahlverfahren hergestellten Leitern (auf mehrere Folien oder beide Seiten einer Folie oder unmittelbar übereinander gedruckt) kombiniert werden.

Alternativ zu der bezüglich der ersten Ausführungsform beschriebenen Aufbringung von Leitern auf separate Funktionsschichten (Folien) können die ersten Leiter auf einer ersten Seite einer Folie und die zweiten Leiter auf der zweiten Seite der Folie aufgebracht (beispielsweise mittels Inkjet) werden. Eine solche Folie kann dann auf eine Trägerschicht aufgebracht werden.

**Bezugszeichenliste**

| | | | |
|---|---|---|---|
| 10 | Erfassungseinheit | 71 | Segment |
| 12 | Gegenstand | 72 | Kontaktierungsleitung |
| 14 | Steuereinheit | 74 | Kontaktierungsleitung |
| 14a | Empfangseinheit | 76 | Touchpadbereich |
| 14b | Computer | 78 | Modulbereich |
| 14c | Ausgabeeinheit | 80 | Prozessormodul (Controller) |
| 16 | Programmeinheit | 82 | Energieversorgungsmodul |
| 20 | Trägerschicht | 84 | Kommunikationsmodul (ähnlich Sendeeinheit 38) |
| 22 | erste Funktionsschicht | | |
| 24 | elektrischer Leiter | 86 | Isolierbereiche |
| 26 | zweite Funktionsschicht | 88 | flächiger Leiterbereich |
| 28 | elektrischer Leiter | 90 | flächiger Leiterbereich |
| 29 | Isolierschicht | 91 | linienförmiger Verbindungsbereich |
| 30 | Dekorschicht | 92 | Primerschicht |
| 32 | Erfassungsfläche | 94 | Abdeckschicht |
| 34 | Touchpad | 96 | Dekordruck |
| 36 | Auswerteinheit | 98 | Deckschicht |
| 38 | Sendeeinheit | 100 | teilweise oder vollständig transparentes Material |
| 40 | Ausnehmung | | |
| 42 | Display | 102 | Ziffernblockbereich |
| 44 | Bedienfeld | 104 | Schiebereglerbereich |
| 46 | Funktionsschicht | 106 | Funktionsbereich für vordefinierte Funktion |
| 48 | Antenne | | |
| 50 | Sensorfeld | 108 | freibelegbarer Funktionsbereich |
| 52 | Schaltfeld | 110 | Codekartenbereich |
| 60 | Abstandssensor | 112 | Codekarte |
| 61 | Gruppe | 114 | Freihandeingabebereich |
| 62 | Streifen | 116 | bereichsweise elastische Schicht |
| 64 | Feld | | |
| 66 | externe Einheit | | |
| 70 | OLED Schicht | | |

## Patentansprüche

1. System zum Erfassen der Position eines Gegenstandes auf einer Erfassungsfläche sowie Erzeugen und Ausgeben gegenstandsspezifischer Information enthaltend
eine Erfassungseinheit (10) mit einem Touchpad (34) zum kapazitiven Erfassen des Gegenstands mit einer Mehrzahl von ersten elektrischen Leitern (24) und einer Mehrzahl von zweiten elektrischen Leitern (28), die in Aufsicht auf die Leiter (24, 28) sich mit den ersten Leitern (24) kreuzend angeordnet sind, und einer über den Leitern (24, 28) angeordneten Berührschicht, deren Oberseite als Erfassungsfläche (32) ausgebildet ist, bei deren Berührung durch einen Gegenstand der Gegenstand kapazitiv erfasst wird und von den Leitern (24, 28) ein Signal abgreifbar ist, mittels dessen der Ort der Berührung auf der Erfassungsfläche (32) bestimmbar ist, wobei die Berührschicht als eine Dekorschicht (30) mit einem visuell und/oder haptisch erfassbaren Dekor ausgebildet ist,
eine Auswerteinheit (36) zum Erzeugen von dem auf der Erfassungsfläche (32) befindlichen Gegenstand (12) zugeordneten Gegenstandsdaten aus dem Signal,
eine Sendeeinheit (38) zum Senden der Gegenstandsdaten,
eine Steuereinheit (14) mit einer Empfangseinheit (14a) zum Empfangen der Gegenstandsdaten,
einen Computer (14b) zum Auswerten der Gegenstandsdaten und Erzeugen von von den Gegenstandsdaten abhängigen Auswertdaten nach einem vorbestimmten Programm, und
eine Ausgabeeinheit (14c) zum Ausgeben einer aus den Auswertdaten hergeleiteten Information,
wobei
mit dem Dekor im Falle des visuell erfassbaren Dekors Positionsfelder, Wege/Bahnen, visuelle Zeichen wie Ornamente, Bilder, Piktogramme, grafische Flächen, wie Farbfelder oder Buchstaben-Zahlenfelder ausgebildet sind und mit dem Dekor im Falle des haptisch erfassbaren Dekors Positionsfelder und Wege/Bahnen erfassbar sind,
unterschiedliche Dekorschichten (30) mit zueinander unterschiedlichen Dekoren auswechselbar vorgesehen sind,
das Programm derart auf das jeweilige Dekor abgestimmt ist, dass mittels des Programms bestimmt werden kann, an welcher Position bezüglich des Dekors sich der Gegenstand auf der Erfassungsfläche befindet, und
in den aus dem Signal erzeugten Gegenstandsdaten eine Dicke und/oder Form und/oder Größe und/oder Dotierung mit Ladungen mindestens einer elektrisch leitenden Schicht oder mehrerer elektrisch leitender Flächenbereiche des wenigstens einen Gegenstands und/oder das Muster der sich voneinander unterscheidenden elektrisch leitenden Flächenbereiche des wenigstens einen Gegenstands und/oder die Kontur der auf der Erfassungsfläche befindlichen Unterseite des wenigstens einen Gegenstandes enthalten ist, sodass vom Touchpad (34) nicht nur die Position des wenigsten einen Gegenstandes sondern auch spezifische Merkmale der Form, Größe, Musterung oder Codierung seiner Unterseite erfasst werden.

2. System nach Anspruch 1, bei dem das Dekor im Falle des visuell oder visuell und haptisch erfassbaren Dekors aus Farbpigmenten ausgebildet ist.

3. System nach Anspruch 1 oder 2, bei dem jeder der Leiter (24, 28) miteinander verbundene in einer Aufsicht flächige Leiterbereiche (88, 90) aufweist, wobei die flächigen Leiterbereiche (88) des ersten Leiters sich in einer Aufsicht nicht mit den flächigen Leiterbereichen (90) des zweiten Leiters überlappen.

4. System nach einem der Ansprüche 1 bis 3, wobei die Dekorschicht (30) als das Dekor einen Dekordruck (96) und über dem Dekordruck (96) eine klare Deckschicht (98) aufweist, mit der der Dekordruck (96) geschützt ist.

5. System nach einem der Ansprüche 1 bis 4, enthaltend eine Programmeinheit (16), in der von den unterschiedlichen Dekoren abhängige Programme gespeichert sind.

6. System nach Anspruch 5, bei dem auf den verschiedenen Dekorschichten jeweils ein Programm gespeichert ist, das von der Programmeinheit auslesbar ist.

7. System nach Anspruch 5, bei dem die Erfassungsfläche oder Dekorschicht eine Kodierung aufweist, die von der Programmeinheit (16) ausgelesen wird, so dass die Programmeinheit (16) in der Steuereinheit (14) ein der jeweiligen Erfassungsfläche oder Dekorschicht entsprechendes Programm aktiviert.

8. System nach einem der Ansprüche 1 bis 7, wobei
die elektrischen Leiter (24, 28) einzelne nebeneinander angeordnete Streifen (62) bilden, und
die Erfassungsfläche als eine Regalfläche eines Regals ausbildet ist, so dass auf der Erfassungsfläche über den Streifen (62) angeordnete Gegenstände zur Bestimmung des Belegungszustands des Regals erfassbar sind.

9. System nach einem der Ansprüche 1 bis 8 wobei
durch das Dekor eine Taste oder einen Schalter bestimmt ist,
das Signal bei einer Erfassung eines auf der Erfassungsfläche im Bereich der Taste oder des Schalters befindlichen Gegenstands abgreifbar ist, und
die Auswerteinheit (36) zum Erzeugen von dem im Bereich der Taste oder des Schalters befindlichen Gegenstands (12) zugeordneten Gegenstandsdaten aus dem Signal ausgebildet ist.

10. System nach einem der Ansprüche 1 bis 9, wobei die Erfassungseinheit (10) eine unterhalb eines durchsichtigen oder durchscheinenden Bereiches der Dekorschicht angeordnete OLED-Schicht (70) enthält.

11. System nach Anspruch 10, wobei
die OLED Schicht in einzelne OLED Segmente aufgeteilt ist, und
die Erfassungsfläche mittels der OLED-Segmente (70) entsprechend dem im Steuergerät aktivierten Programm selektiv beleuchtbar ist.

12. System nach Anspruch 10 oder 11, wobei Leiterbahnen zur Steuerung der OLED Schicht (70) in einem elektronisch steuerbaren Tröpfchendruckverfahren zusammen mit Leiterbahnen des Touchpads hergestellt sind.

13. System nach einem der Ansprüche 1 bis 12, bei dem
der Gegenstand ein Finger ist.

14. System nach einem der Ansprüche 1 bis 13, bei dem
das Dekor oder die Dekorschicht mittels eines elektronisch steuerbaren Tröpfchendruckverfahrens ausgebildet wird und/oder die elektrischen Leiter (24, 28) mittels eines elektronisch steuerbaren Tröpfchendruckverfahrens ausgebildet werden.

15. System nach einem der Ansprüche 1 bis 14, bei dem
die Dekorschicht (30) einen Dekordruck (96) und bevorzugt eine Primerschicht (92) eine Abdeckschicht (94) und/oder eine bevorzugt klare Deckschicht (98) aufweist.

## Claims

1. System for detecting the position of an object on a detecting surface, as well as for generating and outputting object-specific information, comprising
a detecting unit (10) having a touchpad (34) for capacitively detecting the object by a plurality of first electrical conductors (24) and a plurality of second electrical conductors (28) that are disposed, in a plan view of the conductors (24, 28), in a crossing manner with the first conductors (24), and a contact layer disposed above the conductors (24, 28), the topside of the contact layer being formed as a detecting surface (32); upon the detecting surface (32) being contacted by an object, the object is capacitively detected and a signal can be picked up from the conductors (24, 28), using which signal the position of the contacting on the detecting surface (32) is determinable, wherein the contact layer is configured as a decorative layer (30) having a visually and/or haptically detectable decoration, wherein
an evaluating unit (36) for generating object data associated with the object (12) located on the detecting surface (32),
a transmitter unit (38) for transmitting the object data,
a control unit (14) having a receiver unit (14a) for receiving the object data,
a computer (14b) for evaluating the object data and for generating evaluation data, as a function of the object data, in accordance with a predetermined program, and
an output unit (14c) for outputting of information derived from the evaluation data,
wherein
in case of the visually detectable decoration, positional fields, paths/tracks, visual signs such as ornaments, images, pictograms, graphical surfaces such as color fields or letter-number fields are formed with the decoration and, in case of the haptically detectable decoration, positional fields and paths/tracks are detectable,
different decorative layers (30) with decorations different with respect to each other are provided in an exchangeable manner,
the program is adapted to the particular decoration in such a manner that the position of the object on the detecting surface with respect to the decoration can be determined by the program,
a thickness and/or shape and/or size and/or doping with charges of at least one electrically-conductive layer or of a plurality of electrically-conductive surface area portions of the at least one object, and/or the pattern that differ from one another of the electronically-conductive surface area portions of the at least one object and/or the contour of the underside of the at least one object, which underside is located on the detecting surface, is contained in the object data generated from the signal, such that not only the position of the at least one object but also specific features such as the shape, size, and patterning or coding of its underside can be detected by the touchpad (34).

2. The system according to claim 1, wherein, in case of the visually detectable decoration or in case of the visually and haptically detectable decoration, the decoration is formed from color pigments.

3. The system according to claim 1 or 2, wherein each of the conductors (24, 28) has, in a planar view, planar conducting regions (88, 90) connected to one another, wherein, in a plan view, the planar conducting regions (88) of the first conductor do not overlap with the planar contacting regions (90) of the second conductor.

4. The system according to any one of claims 1 to 3, wherein the decorative layer (30) comprises, as the decoration, a decorative printing (96) and, above the decorative printing (96), a clear cover layer (98), with which the decorative printing (96) is protected.

5. The system according to any one of claims 1 to 4, including a program unit (16), in which programs that function in accordance with the different decorations are stored.

6. The system according to claim 5, wherein a program, which is readable by the program unit (16), is stored on the different decorative layers, respectively.

7. The system according to claim 5, wherein the detecting surface or the decorative layer comprises a coding that is read by the program unit (16) such that the program unit (16) in the control unit (14) activates a program corresponding to the particular detecting surface or decorative layer.

8. The system according to any one of claims 1 to 7, wherein
the electrical conductors (24, 28) form discrete, adjacently-disposed strips (62), and
the detecting surface is formed as a shelf surface of a shelf such that objects disposed on the detecting surface above the strips (62) can be recognized so that the occupancy state of the shelf can be determined.

9. The system according to any one of claims 1 to 8, wherein
a button or a switch is determined by the decoration,
the signal is tappable upon detecting an object being located on the detecting surface in the region of the button or the switch, and
the evaluation unit (36) is adapted to generate object data associated with the object (12) located in the region of the button or the switch from the signal.

10. The system according to any one of claims 1 to 9, wherein the detecting unit (10) includes an OLED layer (70) disposed below a transparent or translucent region of the decorative layer.

11. The system according to claim 10, wherein
the OLED layer is divided into discrete OLED segments,
the detecting surface can be selectively illuminated by the OLED segments (70) in accordance with the program activated in the control device.

12. The system according to claim 10 or 11, wherein conducting paths for controlling the OLED layer (70) are manufactured together with conducting paths of the touchpad in an electronically-controllable droplet printing method.

13. The system according to any one of claims 1 to 12, wherein
the object is a finger.

14. The system according to any one of claims 1 to 13, wherein
the decoration or the decorative layer are formed using an electronically-controllable droplet printing method and/or the conductors (24, 28) are formed using an electronically-controllable droplet printing method.

15. The system according to any one of claims 1 to 14, wherein
the decorative layer (30) comprises a decorative printing (96) and preferably a primer layer (92), a masking layer (94) and/or a preferable clear cover layer (98).

## Revendications

1. Système de détection de la position d'un objet sur une surface de détection ainsi que de génération et de sortie d'informations spécifiques à l'objet comportant
une unité de détection (10) avec un pavé tactile (34) pour détecter de manière capacitive l'objet, avec une pluralité de premiers conducteurs électriques (24) et une pluralité de deuxièmes conducteurs électriques (28) qui sont disposés, dans une vue en plan des conducteurs (24, 28), de façon à se croiser avec les premiers conducteurs (24), et une couche de contact disposée par-dessus les conducteurs (24, 28), dont la face supérieure est conçue comme une surface de détection (32), dans laquelle, lorsqu'un objet touche celle-ci, l'objet est détecté de manière capacitive et un signal peut être prélevé des conducteurs (24, 28), au moyen duquel l'emplacement du toucher sur la surface de détection (32) peut être déterminé, la couche de contact étant conçue comme une couche décorative (30) avec un décor détectable visuellement et/ou haptiquement,
une unité d'évaluation (36) pour générer, à partir du signal, des données d'objet associées à l'objet (12) situé sur la surface de détection (32),
une unité de transmission (38) pour transmettre les données d'objet,
une unité de commande (14) avec une unité de réception (14a) pour recevoir les données d'objet,
un ordinateur (14b) pour évaluer les données d'objet et pour générer des données d'évaluation en fonction des données d'objet selon un programme prédéterminé, et
une unité de sortie (14c) pour sortir des informations dérivées des données d'évaluation,
dans lequel,
dans le cas du décor visuellement détectable, des champs de position, des chemins/routes, des signes visuels tels que des ornements, des images, des pictogrammes, des surfaces graphiques, tels que des champs de couleur ou des champs de lettres et de chiffres sont formés avec le décor, et dans le cas du décor détectable haptiquement, des champs de position et des chemins/routes sont détectables avec le décor,
où différentes couches décoratives (30) avec des décors mutuellement différents sont fournies de manière interchangeable,
le programme étant adapté au décor respectif de telle manière que le programme peut être utilisé pour déterminer la position à laquelle l'objet se trouve sur la surface de détection par rapport au décor, et
une épaisseur et/ou une forme et/ou une taille et/ou un dopage avec des charges d'au moins une couche électriquement conductrice ou de plusieurs surfaces électriquement conductrices dudit au moins un objet et/ou le motif des surfaces électriquement conductrices, qui diffèrent les unes des autres, de l'au moins un objet et/ou le contour de la face inférieure de l'au moins un objet situé sur la surface de détection est inclus dans les données d'objet générées à partir du signal, de sorte que le pavé tactile (34) ne détecte pas seulement la position de l'au moins un objet mais aussi les particularités de la forme, de la taille, du motif ou du codage de sa face inférieure.

2. Système selon la revendication 1, dans lequel le décor est formé de pigments de couleur dans le cas du décor détectable visuellement ou visuellement et haptiquement.

3. Système selon la revendication 1 ou 2, dans lequel chacun des conducteurs (24, 28) a des zones conductrices (88, 90) interconnectées de forme plate dans une vue en plan, les zones conductrices plates (88) du premier conducteur ne se chevauchant pas, dans une vue en plan, sur les zones conductrices plates (90) du deuxième conducteur.

4. Système selon l'une quelconque des revendications 1 à 3, dans lequel la couche décorative (30) a une impression décorative (96) comme le décor et une couche de finition transparente (98) sur l'impression décorative (96) protégeant l'impression décorative (96).

5. Système selon l'une des revendications 1 à 4, comprenant une unité de programme (16) dans laquelle sont stockés des programmes dépendant des différents décors.

6. Système selon la revendication 5, dans lequel un programme pouvant être lu par l'unité de programme est à chaque fois stocké sur les différentes couches décoratives.

7. Système selon la revendication 5, dans lequel la surface de détection ou la couche décorative a un code qui est lu par l'unité de programme (16), de sorte que l'unité de programme (16) active un programme dans l'unité de commande (14) correspondant respectivement à la surface de détection ou à la couche décorative.

8. Système selon l'une quelconque des revendications 1 à 7, dans lequel
les conducteurs électriques (24, 28) forment des bandes individuelles (62) disposées les unes à côté des autres, et
la surface de détection est conçue comme une surface d'étagère d'une étagère, de sorte que des objets disposés sur la surface de détection peuvent être détectés via les bandes (62) pour déterminer l'état d'occupation de l'étagère.

9. Système selon l'une quelconque des revendications 1 à 8, dans lequel
un bouton ou un interrupteur est déterminé par le décor,
le signal peut être capté lorsqu'un objet situé sur la surface de détection dans la zone du bouton ou de l'interrupteur est détecté, et
l'unité d'évaluation (36) est conçue pour générer à partir du signal des données d'objet associées à l'objet (12) situé dans la zone du bouton ou de l'interrupteur.

10. Système selon l'une des revendications 1 à 9, dans lequel l'unité de détection (10) contient une couche OLED (70) disposée sous une zone transparente ou translucide de la couche décorative.

11. Système selon la revendication 10, dans lequel
la couche OLED est divisée en segments OLED individuels, et
la surface de détection peut être éclairée sélectivement au moyen des segments OLED (70) selon le programme activé dans l'unité de commande.

12. Système selon la revendication 10 ou 11, dans lequel des pistes conductrices pour contrôler la couche OLED (70) sont produites dans un processus d'impression de gouttelettes contrôlable électroniquement simultanément avec des pistes conductrices du pavé tactile.

13. Système selon l'une quelconque des revendications 1 à 12, dans lequel
l'objet est un doigt.

14. Système selon l'une quelconque des revendications 1 à 13, dans lequel
la décoration ou la couche décorative est formée en utilisant un processus d'impression de gouttelettes contrôlable électroniquement et/ou les conducteurs électriques (24, 28) sont formés en utilisant un processus d'impression de gouttelettes contrôlable électroniquement.

15. Système selon l'une quelconque des revendications 1 à 14, dans lequel
la couche décorative (30) présente une impression décorative (96) et de préférence une couche de fond (92), une couche de recouvrement (94) et/ou une couche supérieure de préférence transparente (98).
